# EUROPÄISCHE PATENTSCHRIFT

(11) **EP 1 972 896 B1**
(45) Veröffentlichungstag und Bekanntmachung des Hinweises auf die Patenterteilung: **06.05.2015**
(21) Anmeldenummer: 08004318.5
(22) Anmeldetag: 08.03.2008
(51) Int. Cl.: G01C 23/00, B64D 45/08

(54) **Mensch-Maschinen-Interface zur Pilotenunterstützung bei Start und Landung eines Fluggerät bei verminderter Außensicht**
Human-machine interface for supporting a pilot when taking off and landing an aircraft in low visibility
Interface homme-machine destinée à l'assistance au pilote lors du démarrage et de l'atterrissage d'un aéronef en cas de visibilité réduite

(30) Priorität: 23.03.2007 DE 102007014015
(43) Veröffentlichungstag der Anmeldung: 24.09.2008
(73) Patentinhaber: Airbus Defence and Space GmbH, 85521 Ottobrunn (DE)
(72) Erfinder: Wegner, Matthias, 88048 Friedrichshafen (DE); Hoyer, Michael, 88633 Heiligenberg (DE); Fiederling, Ulf, 88697 Bermatingen-Ahausen (DE); Kielhorn, Peter, 88048 Friedrichshafen (DE)
(74) Vertreter: Meel, Thomas

(56) Entgegenhaltungen:
- EP-A1- 1 102 038
- WO-A1-03/019225
- US-A- 5 257 347
- US-A1- 2003 132 860
- US-A1- 2005 237 226
- US-A1- 2007 001 874

## Beschreibung

Die Erfindung betrifft ein Mensch-Maschinen-Interface (MMI) zur Pilotenunterstützung bei Start und Landung eines Fluggeräts, insbesondere eines Helikopters bei verminderter Außensicht oder unter eingeschränkten Sichtbedingungen. In trockenen, wüstenartigen Gebieten (wie z.B. Afghanistan) kommt es bei fast jeder Außenlandung von Hubschraubern zu einer starken Aufwirbelung von Sand und Staub. Dies wird durch den sog. Down-Wash des Hauptrotors verursacht. Die Sand- bzw. Staubaufwirbelung führt oft dazu, dass der Pilot die Cockpit-Außensicht ganz oder teilweise verliert - dem so genannten Brown-Out. Durch den Verlust der Außensicht besteht für den Piloten die Gefahr des Verlustes der räumlichen Orientierung und dies insbesondere hinsichtlich Nick- und/oder Rollwinkel sowie ungewollter seitlicher Drift des Luftfahrzeugs.

Der Kern einer für Brown-Out geeigneten Hubschrauberlandehilfe (Brown-Out-Recovery-System) ist dessen MMI als Schnittstelle zwischen Mensch und Maschine. Die operationelle Einsatztauglichkeit, hängt dabei entscheidend von der Brauchbarkeit einer entsprechenden Display-Anzeige ab. Gründe hierfür sind:
a) die grundsätzliche aero-dynamische Instabilität eines Hubschraubers (speziell beim sog. Schwebe- oder Hover-Flug),
b) die oft unkalkulierbaren Einflusses von Windböen, Turbolenzen und Scherwinden im Landeendanflug (oder beim Start),
c) das bei Außenlandungen oft völlig unbekannte Gelände sowie die Hindernissituation am Landeplatz insbesondere im Hinblick auf Abspanndrähte und Stromleitungen,
d) die bei militärischen und SAR-Einsätzen sich möglicherweise sehr schnell ändernde Situation am Landeplatz,
e) die momentane Messgenauigkeit einsatztauglicher Fluglagereferenz- und Distanzmeßsysteme,
f) die Möglichkeit der flexiblen Reaktion und eventuell notwendiger Korrekturen des Piloten und
g) die Frage der Luftfahrtzulassung.

Diese Gründe lassen es kurz- bis mittelfristig als unwahrscheinlich erscheinen, dass eine Außenlandung unter Brown-Out Bedingungen vollständig autonom auf Basis eines vollautomatischen Landesystems möglich sein wird. Man muss vielmehr davon ausgehen, dass es nach wie vor der Pilot sein wird, der im Brown-Out Fall den Hubschrauber landet. Somit erscheint nur eine visuelle Display-Anzeige als geeignet, dem Piloten bei einer Brown-Out Landung wirkungsvoll sowie unmittelbar zu unterstützen.

In der DE 10 2004 051 625 A1 ist eine Hubschrauberlandehilfe speziell für Brown-Out Bedingungen beschrieben, bei dem während des Brown-Outs auf einem Display eine virtuelle 3D-Ansicht der Umgebung in der Perspektive des Piloten dargestellt wird, wobei die virtuelle Ansicht auf der Basis von 3D-Daten, die beim Landeanflug vor Einsetzen des Brown-Outs erzeugt wurden, generiert wird.

In der WO 2005/015333 A2 ist ebenfalls eine Hubschrauberlandehilfe für Brown-Out Bedingungen beschrieben, die zur Pilotenunterstützung mittels unterschiedlicher Sensoren erzeugte Umgebungsinformationen und Flugzustandsdaten kombiniert und mittels Hubschrauberdatenbus laufend aktualisiert. Dabei werden die Umgebungsinformationen einerseits und Flugzustandsdaten wie Geschwindigkeit, Bewegungs- und Driftrichtung und Höhe über Grund andererseits in einem gemeinsamen Display dargestellt.

Die US 2005/0237226 A1 beschreibt eine Hubschrauberlandehilfe, bei der auf einem gemeinsamen Display neben einer Driftanzeige auch eine Anzeige der Höhe über Grund enthalten ist. Die Driftanzeige befindet sich im Zentrum des Displays, während die Höhenanzeige am Rand des Displays als Balkenanzeige realisiert ist.

Die EP 1 102 038 A1 beschreibt ein Flugführungsdisplay, bei dem das Gelände als Schachbrettmuster ausgeführt ist. Die Darstellung des Geländes umfasst einen Horizont.

Es ist Aufgabe der Erfindung, eine Mensch-Maschinen-Schnittstelle zu schaffen, um dem Piloten bei einer Brown-Out Landung eine optimierte intuitive Unterstützung bei der räumlichen Orientierung ermöglicht.

Diese Aufgabe wird mit dem Gegenstand des Patentanspruchs gelöst. Vorteilhafte Ausführungen der Erfindung sind Gegenstand von Unteransprüchen.

Mit dem erfindungsgemäßen Brown-Out MMI werden auf einem einzigen Display die entscheidenden Kenngrößen zur visuellen Einschätzung der Lage und Bewegung des Fluggeräts (im folgenden wird beispielhaft von einem Hubschraubers ausgegangen) im Raum graphisch zu einem Brown-Out MMI kombiniert:
1. die natürliche Außenansicht - also die Gesamtheit aller Hindernisse (Leitungen und Drähte) und aller natürlichen sowie künstlichen Objekte (Gebäude, Bäume und Büsche ...) und aller topographischen Gegebenheiten inklusive des Erdbodens in der näheren Umgebung des Landeplatzes,
2. die Kenntnis der momentanen Fluglage, Bewegungsrichtung und Geschwindigkeit des Luftfahrzeugs über Grund sowie deren Änderung und in vorteilhaften Ausführungen deren Änderungsgeschwindigkeit,
3. die Kenntnis der momentanen Flughöhe über Grund (AGL) sowie in vorteilhaften Ausführungen deren Änderungstendenz.

Damit werden dem Piloten alle für eine Brown-Out Landung notwendigen Informationen konzentriert auf nur ein einziges Anzeigegerät visuell dargestellt, so dass es möglich ist, allein auf Basis des erfindungsgemäßen Brown-Out MMI den Hubschrauber in einer intuitiven Weise zu landen.

Das erfindungsgemäße Brown-Out MMI besteht aus mehreren, übereinander dargestellten Graphik-Layern, um den Kriterien zur Lage- und Bewegungskontrolle in geeigneter Art und Weise Rechnung zu tragen. Jeder dieser Layer enthält jeweils gewisse Graphikprimitive und Symbolik, welche in summa das vollständige Brown-Out MMI definieren.

Folgende Graphik-Layer sind in dem erfindungsgemäßen Brown-Out MMI übereinander dargestellt:
a) Ein Basis-Layer in Form einer ebenen Basisfläche. Diese Basisfläche symbolisiert eine idealisierte Bodenfläche, berechnet nur aufgrund des momentanen Wertes der Flughöhe über Grund und der momentanen Fluglagedaten (Rollwinkel, Nickwinkel, Kurswinkel). Die reale dreidimensionale Topologie des Bodens geht also hier nicht ein. Diese wird vielmehr durch den 3D-Szenen-Layer erfasst. Die Basisfläche wird durch einen künstlichen Horizont begrenzt und wird mit den momentanen Flugzustandsdaten und der momentanen Höhe über Grund fortlaufend aktualisiert. Insgesamt veranschaulicht der Basis-Layer qualitativ in einer für den Piloten sehr leicht nachvollziehbaren Weise Fluglage und Flughöhe des Fluggeräts im Raum. Sie dient dem Piloten zur verbesserten räumlichen Orientierung in der kritischen Phase des Brown-Out, während der häufig Sand- und Staubpartikel in chaotischer Verwirbelung schräg an den Cockpitfenstern vorbeiströmen und die räumliche Orientierung erschweren.
b) Ein 3D-Szenen-Layer, der ein dreidimensionales positionsgenaues sowie zeitlich korrektes (d.h. in Echtzeit) Abbild der realen Szenerie in Richtung des Flugpfads des Hubschraubers darstellt, und der mit den momentanen Flugzustandsdaten und der momentanen Höhe über Grund fortlaufend aktualisiert wird. Der 3D-Szenen-Layer dient insbesondere zur räumlichen Orientierung des Piloten bei völligem oder teilweisem Fehlen der Cockpit-Außensicht. Die Darstellung des 3D-Szenen-Layers besteht aus 3D-Daten der Umgebung des Landeplatzes, d.h. anders als bei einem herkömmlichen 2-dimensionalen, projektiven Abbild der Umgebung sind für jeden Bildpunkt des 3D-Szenen-Layers die Koordinaten in 3 räumlichen Dimensionen bekannt. Die Darstellung der 3D-Szene kann z.B. derart erfolgen, dass die Entfernung von Objekten oder Hindernissen zum Fluggerät durch unterschiedliche Farben oder Grauwerte codiert wird. Eine andere Möglichkeit ist die Codierung auf der Basis der Höhe über Grund des betreffenden Bildpunkts oder einer Kombination aus Entfernung und Objekthöhe.
c) Ein Schwebeflug-Layer zur kombinierten Darstellung der Geschwindigkeit über Grund, der Richtung der momentanen Bewegungs- oder Driftrichtung in Relation zur Hubschrauber-Längsachse sowie der Flughöhe über Grund. Der Schwebeflug-Layer kann in weiteren Ausführungen zusätzliche Informationen als Unterstützung für den Piloten zur Einschätzung des Flugzustands enthalten, z.B. die numerische Anzeige des Kurswinkels oder der momentanen Höhe über Grund sowie eine Nickwinkelanzeige (graphisch bzw. alphanumerisch).

Wesentlich für die Erfindung ist, dass sich alle Layer des erfindungsgemäßen Brown-Out MMI's mit ihren jeweiligen Informationen gegenseitig stützen und ergänzen. Ein einziger Layer für sich genommen ist nicht in der Lage, dem Piloten ein einsatztaugliches Brown-Out MMI an die Hand zu geben. Erst die Kombination aller oben beschriebenen MMI-Komponenten ermöglicht den operationellen Einsatz und ist damit in der Lage, eine substantielle Hilfe und Unterstützung im Brown-Out Fall zu sein.

Zusätzlich zu den genannten Graphik-Layern können in dem erfindungsgemäßen MMI graphische oder alphanumerische Zeichen dargestellt werden, die das Vorhandensein eines Brown-Out Zustands kennzeichnen. Die Gesamtheit derartiger Zeichen wird im Folgenden als BOUT-Layer bezeichnet. Dieser Layer weist den Piloten insbesondere auf die Funktionsfähigkeit des dem MMI übergeordneten Brown-Out-Recovery-Systems im Falle eines teilweisen oder vollständigen Verlusts der Cockpit-Außensicht hin.

Im Brown-Out Zustand ist die Cockpit-Außensicht teilweise oder vollständig durch aufgewirbelten Sand und Staub verdeckt. Wie ein dem Brown-Out MMI übergeordnetes Brown-Out Recovery System einen solchen Zustand erkennt (manuell durch eine Pilotenaktion oder automatisch) und wie die 3D-Szenendaten während des Brown-Outs verwaltet werden (Darstellung aus einer zuvor akkumulierter History/Datenbank, automatisches, algorithmisches Filtern der Staubdaten oder sensortechnisches "Hindurchsehen" durch die Wolke) ist für das erfindungsgemäße MMI ohne Belang, d.h. das Brown-Out MMI funktioniert in all diesen Konstellationen in gleicher Art und Weise.

Die erfindungsgemäße MMI kann universell unter operationellen Bedingungen eingesetzt werden. Es ermöglicht eine intuitive Unterstützung des Piloten bei der räumlichen Orientierung während der Landung speziell unter Brown-Out Bedingungen. Für das erfindungsgemäße Brown-Out MMI ist lediglich ein einziges Display (z.B. Multifunktionsdisplay MFD, ein Head-Up-Display HUD, ein Helmet-Mounted-Display HMD) im Cockpit notwendig. Deshalb kann die vorliegende Erfindung in jedem Brown-Out Recovery System, welches auf dem Prinzip einer visuellen Orientierungshilfe beruht, zum Einsatz kommen.

Ein weiterer Vorteil der vorliegenden Erfindung ist, dass das erfindungsgemäße MMI auch zur Pilotenunterstützung unter so genannten White-Out Bedingungen anwendbar ist, bei denen durch Aufwirbelung von losen Schnee- und Eiskristallen eine ähnlich kritische Situation wie beim Brown-Out besteht.

Nachfolgend werden konkrete Ausführungen der Graphik-Layer unter Bezugnahme auf Figuren im Einzelnen beschrieben. Es zeigen:
- Fig. 1: eine Ausführung des Basis-Layers (Prinzipdarstellung),
- Fig. 2: eine konkrete graphische Realisierung des Basis-Layers; die korrespondierende, aktuelle Fluglage ist zum Vergleich rechts unten zusätzlich dargestellt,
- Fig. 3: eine Ausführung der 3D-Bodenfläche als Bestandteil des 3D-Szenen-Layers (Prinzipdarstellung),
- Fig. 4: eine Ausführung des 3D-Szenen-Layers mit 3D-Bodenfläche und darauf angeordneten Nicht-Bodenobjekten (Prinzipdarstellung),
- Fig. 5: eine konkrete graphische Realisierung des 3D-Szenen-Layers mit unterlegtem Basislayer,
- Fig. 6: eine Ausführung des Schwebeflug-Layers (Prinzipdarstellung), wobei der Höhenindikator aus Gründen der Übersichtlichkeit weggelassen wurde,
- Fig. 7: eine Ausführung des Schwebeflug-Layers (Prinzipdarstellung),
- Fig. 8: eine konkrete graphische Realisierung des 3D-Szenen-Layers mit überlagertem Schwebeflug-Layer,
- Fig. 9: eine weitere Ausführung des Schwebeflug-Layers mit der Anzeige zusätzlicher Informationen wie der numerischen Darstellung von Kurswinkel sowie der Höhe über Grund (Prinzipdarstellung),
- Fig. 10: eine konkrete graphische Realisierung der Überlagerung von Basis-Layer, 3D-Szenen-Layer und Schwebeflug-Layer,
- Fig. 11: eine Ausführung des Schwebeflug-Layers mit zusätzlichem Bout-Layer, der das Vorhandensein eines Brown-Out Zustands anzeigt (Prinzipdarstellung),
- Fig. 12: eine konkrete graphische Realisierung der Überlagerung von Basis-Layer, 3D-Szenen-Layer, Schwebeflug-Layer und Bout-Layer.

### Basis-Layer

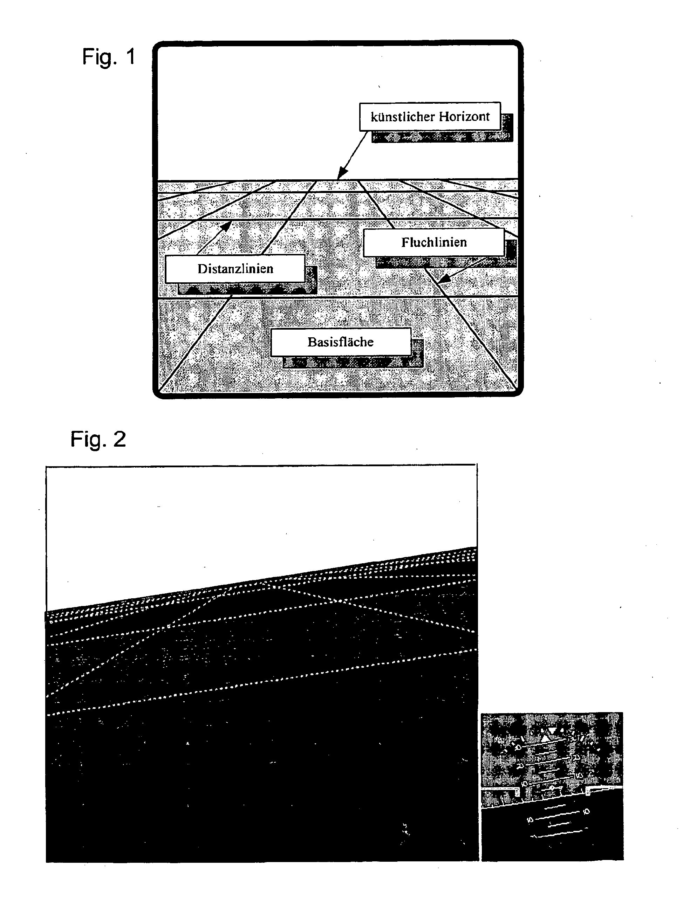

Fig. 1 zeigt eine schematische Darstellung des Basis-Layers. Er besteht aus einer Basisfläche, welche den Zweck hat, dem Piloten allgemein, d.h. qualitativ, die Flughöhe über Grund sowie die momentane Fluglage zu veranschaulichen. Die Basisfläche stellt eine idealisierte Bodenfläche dar, berechnet nur aufgrund des momentanen Wertes der Flughöhe über Grund und der momentanen Flugzustandsdaten, also ohne Berücksichtigung der realen Topographie des Bodens. Begrenzt wird die Basisfläche in der dem Piloten abgewandten Richtung durch den künstlichen Horizont, welcher prinzipiell die gleiche Funktionalität wie ein Fluglageanzeiger im Cockpit besitzt. Durch den künstlichen Horizont des Brown-Out MMI's kann der Pilot Fluglageänderungen bez. Nick- und/oder Rollwinkel leicht ablesen. Zur Verbesserung des räumlichen Eindrucks, der besseren Einschätzung der momentanen Fluglage sowie der Flughöhe über Grund werden auf der Basisfläche des Basis-Layers zusätzlich Flucht- und Distanzlinien eingezeichnet.

Alle graphischen Elemente des Basis-Layers werden mit Hilfe der momentanen Flugzustandsdaten (Fluglage) sowie der aktuellen Höhe über Grund (AGL) aktualisiert. Damit wird sichergestellt, dass alle Änderungen von Fluglage und Höhe über Grund unmittelbar eine entsprechende Änderung in der Graphik-Anzeige des Basis-Layers nach sich ziehen.

Der räumliche Eindruck - insbesondere bezüglich der Abschätzung der Flughöhe über Grund - kann nochmals erhöht werden, wenn die Basisfläche ganz bzw. teilweise mit einem Schachbrettmuster oder einer graphischen Bodentextur oder beidem belegt wird. Ein Beispiel für eine konkrete Realisierung eines solchen Basis-Layers ist in Fig. 2 dargestellt. Die zugehörige Fluglage ist rechts unten in der separaten Darstellung zusätzlich symbolisiert.

### 3D-Szenen-Layer

Der 3D-Szenen-Layer liegt über dem Basis-Layer. Er stellt ein positionsgenaues Abbild der realen 3-dimensionalen Welt in Richtung des Flugpfades des Hubschraubers dar. Positionsgenau bedeutet dabei, dass die dargestellten relativen Ortsunterschiede zwischen dem Flugobjekt und den Objekten der Umgebung der Wirklichkeit entsprechen.

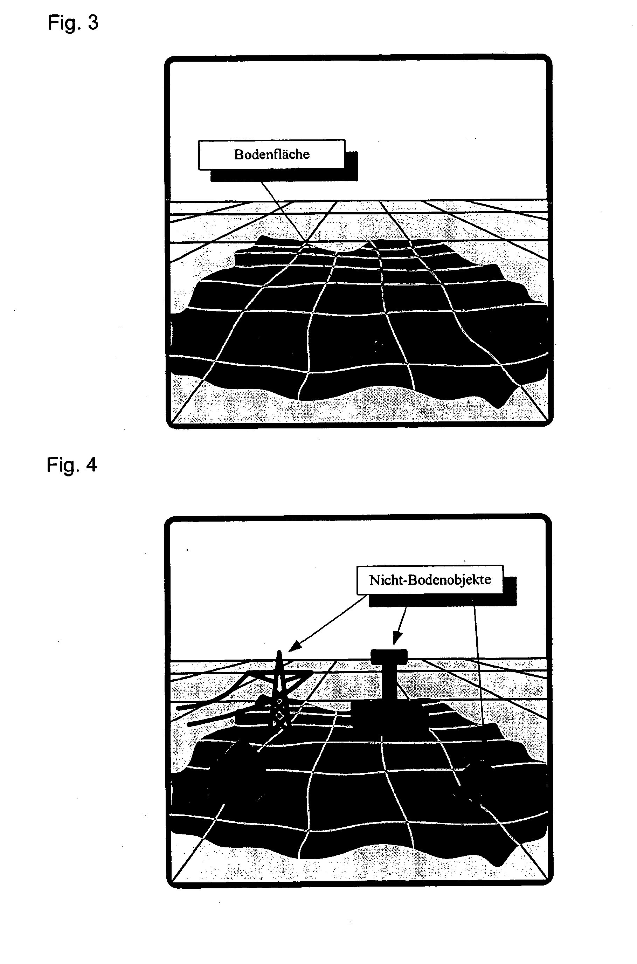

Der 3D-Szenen-Layer kann grob in zwei Bestandteile zerlegt werden:
a) eine 3D-Bodenfläche als Approximation der lokalen Topographie des Erdbodens, wie z.B. in Fig. 3 dargestellt.
b) die Abbildung der Nicht-Bodenobjekte oberhalb der 3D-Bodenfläche (Fig. 4).

Auf der approximierten 3D-Bodenfläche können Flucht und Distanzlinien vorhanden sein, wie in Fig. 3 eingezeichnet. Auch kann die approximierte 3D-Bodenfläche mit einem Schachbrettmuster oder einer Bodentextur vollständig oder teilweise belegt sein.

Die Nicht-Bodenobjekte können numerisch analysiert werden, um alle oder nur bestimmte Typen dieser Nicht-Bodenobjekte (z.B. Leitungen, Abspanndrähte und Masten) im 3D-Szenen-Layer graphisch hervorzuheben. Die numerische Analyse geschieht durch Segmentierung, d.h. die Objekte als solche werden vom Boden getrennt, und/oder Klassifizierung nach vorgegebenen Objekt- bzw. Hindernistypen. Eine solche Erweiterung des Brown-Out MMI's verbessert die räumliche Orientierung zusätzlich und warnt den Piloten vor gefährlichen Hindernissen im Flugpfad.

In einer vorteilhaften Ausführung werden alle oder einzelne der segmentierten bzw. klassifizierten Nicht-Bodenobjekte mit einem graphischem Muster oder einer Objekttextur vollständig oder teilweise belegt.

Zusätzlich können die approximierte 3D-Bodenfläche und/oder die segmentierten bzw. klassifizierten Nicht-Bodenobjekte vollständig oder teilweise durch graphische Bildverbesserung in Form von künstlichem Schattenwurf oder Selbst-Illumination gesondert hervorgehoben werden.

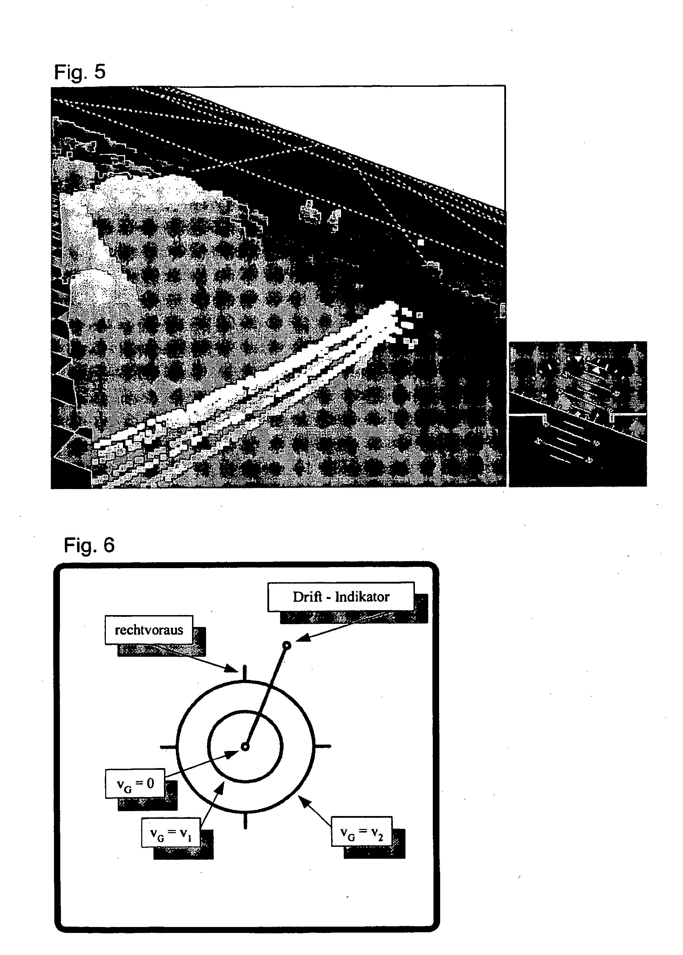

Fig. 5 zeigt eine konkrete Ausführung des 3D-Szenen-Layers mit unterlegtem Basis-Layer. Man erkennt in der Bildmitte eine Hochspannungsleitung sowie Bäume/Gebüsch am Feldrand links sowie oben. Die zugehörige Fluglage ist in dem separaten Bild rechts unten dargestellt.

Alle graphischen Elemente des 3D-Szenen-Layers werden mit Hilfe der momentanen Flugzustandsdaten (Fluglage und -geschwindigkeit) sowie der aktuellen Höhe über Grund (AGL) aktualisiert. Damit wird sichergestellt, dass alle Änderungen von Fluglage, Fluggeschwindigkeit und Höhe über Grund unmittelbar und ohne merkbare zeitliche Verzögerung eine entsprechende Änderung in der Graphik-Anzeige des 3D-Szenen-Layers nach sich ziehen. Es entsteht eine Art "Virtual-Reality" Eindruck.

Für die räumliche Orientierung des Piloten und die Kontrolle des Hubschraubers im Brown-Out Fall spielt der 3D-Szenen-Layer eine sehr wichtige Rolle. Faktisch ersetzt dieser Layer für den Piloten die fehlende Cockpit-Außensicht. Hierbei sind drei Dinge von Bedeutung:
(1) eine genaue Approximation der Erdoberfläche durch die 3D-Bodenfläche,
(2) die größtmögliche Vollständigkeit bez. der Darstellung aller für eine problemlose räumliche Orientierung notwendigen Nicht-Bodenobjekte,
(3) die 3-Dimensionalität sowohl der Bodenfläche als auch aller dargestellten Nicht-Bodenobjekte.

Die Bedeutung der 3-Dimensionalität der Bodenfläche und der Nicht-Bodenobjekte liegt in der Tatsache begründet, dass der Pilot im Brown-Out Fall bis zu 30s und mehr durch die virtuelle Szenerie des 3D-Szenen-Layers fliegen muss, bevor der Hubschrauber am Boden aufsetzt. Darüber hinaus können gefährliche Fluglagesowie Positionsänderungen während der Brown-Out Landung nur dann schnell und korrekt erkannt werden, wenn Höhe, Ausdehnung, Position und Orientierung aller Objekte oder Hindernisse in Relation zum Hubschrauber zu jedem Zeitpunkt korrekt angezeigt werden - einschließlich der momentanen Höhe über Grund. Das geometrisch sowie zeitlich korrekte Nachführen (Translation und Rotation) der 3D-Objekte auf der Projektionsebene des 3D-Szenen-Layers während einer Brown-Out Landung erfolgt unter Zuhilfenahme der momentanen Flugzustandsdaten (Fluglage und Geschwindigkeit) aus denen alle relativen Orts- sowie Orientierungsänderungen abgeleitet werden können.

Die 3D-Informationen für die Bodenfläche und für die Nicht-Bodenobjekte können entweder von einem RADAR, einem Ultraschall-System, einem laserbasierten LADAR oder anderen geeigneten, aktiv messenden Systemen stammen oder mittels Stereoskopie (numerische Tiefenberechnung aus zwei oder mehreren Bildern) errechnet werden.

Als 3D-Sensor wird bevorzugt ein entfernungsbildgebender Sensor, insbesondere ein abbildendes Laserradar eingesetzt, wie es z.B. in der DE 39 42 770 C2 oder DE 43 20 485 A1 beschrieben ist. Besonders geeignet ist z.B. das Helikopter-Laser-Radar HELLAS^{®} von EADS Deutschland GmbH, Ottobrunn, welches 40.000 Pixel /s bei einer Reichweite von bis zu 1,2 km bereitstellt. Die in den Fig. dargestellten konkreten graphischen Realisierungsbeispiele zum Brown-Out MMI basieren auf den 3D-Daten dieses Sensors.

Für die Ermittlung der Flugzustandsdaten (Fluglage und -geschwindigkeit) vor und während einer Brown-Out Situation existieren eine große Menge an geeigneten Lagereferenz- und Navigationsanlagen (z.B. von den Firmen Aerodata Flugmesstechnik GmbH oder Honeywell International Inc.). In Abhängigkeit von der Messgenauigkeit solcher Lagereferenz- und Navigationssysteme kann die Höhe über Grund entweder aus den gemessenen Geschwindigkeitsvektor-Komponenten numerisch berechnet werden oder die AGL-Höhe wird ebenfalls über RADAR, LADAR, Ultraschall etc. gemessen. Zur Ermittlung des momentanen Flugzustandes und/oder der Höhe über Grund können auch geeignete Verfahren aus der digitalen Bildverarbeitung angewandt werden, mit deren Hilfe die Lage und Bewegung des Hubschraubers an Hand des sog. optischen Flusses basierend auf einer Bildfolgenanalyse berechnet wird.

Die 3D-Informationen des 3D-Szenen-Layers für die Bodenfläche und für die Nicht-Bodenobjekte können (a) bis unmittelbar vor dem Brown-Out Zustand akkumuliert und in einem übergeordneten Brown-Out Recovery System zwischengespeichert werden, bevor sie im 3D-Szenen-Layers während des Brown-Outs zur Anzeige gebracht werden oder (b) von einem Sensorsystem erfasst werden, welches vollständig oder teilweise durch die sog. Brown-Out-Walze aus Sand oder Staub hindurch dringt.

Da die 3D-Informationen über die Nicht-Bodenobjekte in erster Linie zur räumlichen Orientierung sowie zur Abschätzung von Fluglage und Höhe über Grund dienen, ist es nicht zwingend erforderlich, dass die nichteinsehbaren Rückseiten dieser Objekte vollständig und korrekt rekonstruiert werden. Das heißt, bei den Rückseiten sind vereinfachende Annahmen über die tatsächliche Geometrie dieser Objekte zulässig. Diese Vereinfachungen auf den Objektrückseiten führen nicht zu einem Orientierungsverlust, da in erster Linie die Erhabenheit der Objekte über der Bodenfläche, ihre prinzipielle geometrische Form sowie insbesondere ihre korrekte Position in Relation zum Hubschrauber die entschiedenen Kenngrößen darstellen.

Ebenso muss die Geometrie der Nicht-Bodenobjekte auch auf deren sichtbaren Vorderseiten nur bis zu einem gewissen Detailgrad rekonstruiert werden. Es ist durchaus hinreichend, nur die generelle geometrische Struktur und die wichtigsten räumlichen Abmessungen der Nicht-Bodenobjekte bei der Darstellung im 3D-Szenen-Layer zu berücksichtigen. Dies beeinträchtigt Lage und Orientierungsvermögen des Betrachters nicht. Unter Abwägung des notwendigen Hardware-Aufwands und der benötigten Verarbeitungszeit sollte jedoch eine möglichst feine und genaue Rekonstruktion der Objektgeometrie bei der Darstellung des 3D-Szenen-Layers angestrebt werden, um durch den Betrachter eine intuitive und gleichzeitig relativ genaue Abschätzung von Fluglage und Höhe zu ermöglichen.

### Schwebeflug-Layer

Der Basis-Layer und der 3D-Szenen-Layer ermöglichen eine räumliche Orientierung und Kontrolle der Fluglage sowie Abschätzung der Höhe über Grund im Brown-Out Fall. Der überlagerte Schwebeflug-Layer zeigt mittels einer speziellen Symbolik die Geschwindigkeit über Grund sowie die Richtung der momentane Bewegungs- oder Driftrichtung in Relation zur Hubschrauber-Längsachse an.

Der Schwebeflug-Layer (Fig. 6) besteht im Wesentlichen aus zwei konzentrischen Kreisen und dem so genannten Drift-Indikator, welcher mit einem virtuellen Gummiband mit dem Mittelpunkt der Schwebeflug-Layer-Symbolik verbunden ist. Im Mittelpunkt der Schwebeflug-Layer-Symbolik befindet sich die Null-Markierung. Die Null-Markierung bezeichnet den Ort auf dem Display, an dem sich der Drift-Indikator befindet, wenn der Hubschrauber keine Fahrt über Grund macht (V_{G} = 0) - z.B. am Boden oder im konstanten Schwebeflug. Der innere konzentrische Kreis markiert in alle Richtungen eine Bewegungs- oder Driftgeschwindigkeit über Grund größer Null (z.B. V_{G} = 5 kn). Das gleiche gilt für den äußeren konzentrischen Kreis des Schwebeflug-Layers mit dem Unterschied, dass hier die Driftgeschwindigkeit über Grund doppelt so groß ist (z.B. V_{G} = 10 kn).

An der sog. 12 Uhr Position des äußeren Kreises befindet sich eine zusätzliche Strichmarke. Diese Marke bezeichnet die Vorausrichtung der Hubschrauber-Längsachse. Diametral dazu auf der 6 Uhr Position befindet sich eine entsprechende Marke, welche bezogen auf die Hubschrauber-Längsachse die Achterausrichtung bezeichnet. Analog gilt dies für die entsprechenden Marken an der 3 Uhr bzw. 9 Uhr Position zur Bezeichnung der Steuerbordquerab- bzw. Backbordquerab-Richtung des Hubschraubers.

Der Drift-Indikator ist beweglich und "wandert" über das Display des Schwebeflug-Layers. Die momentane Position des Drift-Indikators gibt zu jeder Zeit die momentane Geschwindigkeit des Hubschraubers über Grund als auch die momentane Drift-Richtung in Relation zur Hubschrauber-Längsachse an. Die momentane Geschwindigkeit über Grund ist ein Maß für die euklidische Distanz des Drift-Indikators von der oben beschriebenen Null-Markierung im Zentrum des Schwebeflug-Layers. Die momentane Drift-Richtung in Relation zur Hubschauber-Längsachse wird durch das virtuelle Gummiband zwischen der Null-Markierung und dem Drift-Indikator angezeigt. Driftet der Hubschrauber z.B. genau nach Steuerbord querab mit einer Geschwindigkeit über Grund von 10 kn, so würde der Drift-Indikator exakt auf dem äußeren Geschwindigkeitskreis an der 3 Uhr Strichmarke zu liegen kommen.

Mit Hilfe des Schwebeflug-Layers hat der Pilot ein visuelles Instrument an der Hand, das es ihm erlaubt, die momentane Eigenbewegung des Hubschraubers im Brown-Out Fall hinsichtlich Geschwindigkeit und Drift-Richtung sehr genau zu kontrollieren. In Kombination mit dem oben beschriebenen Basis-Layer und dem 3D-Szenen-Layers ergibt sich ein komplexes, jedoch sehr intuitiv ablesbares MMI, welches es ermöglicht, sowohl die Orientierung und Lage des Luftfahrzeugs im Raum als auch dessen Drift zu erkennen. Die Besonderheit hierbei ist, dass innerhalb eines einzigen Anzeigegerätes (Display) die räumliche Ansicht (3D-Szenen-Layer, Basis-Layer) mit einer 2-dimensionalen Symbolik des Schwebeflug-Layers kombiniert wird.

Für ein operationell einsatztaugliches Brown-Out MMI ist zusätzlich zu den beschriebenen Anzeigekomponenten des Schwebeflug-Layers die Anzeige der Höhe über Grund (AGL) von großer Bedeutung. Hierbei ist ein ungefährer, qualitativer Schätzwert (wie er sich für den Piloten aus der Darstellung des 3D-Szenen-Layer ergibt) nicht ausreichend, sondern es ist ein möglichst exakter Wert mit einer hohen Genauigkeit von 1 - 2 ft. AGL-Höhe notwendig. Die möglichst genaue AGL-Höheninformation ist besonders für größere, schwere Hubschrauber mit Radfahrwerk von Wichtigkeit - zumal gerade diese Hubschraubertypen die größten Probleme in Brown-Out Situationen haben.

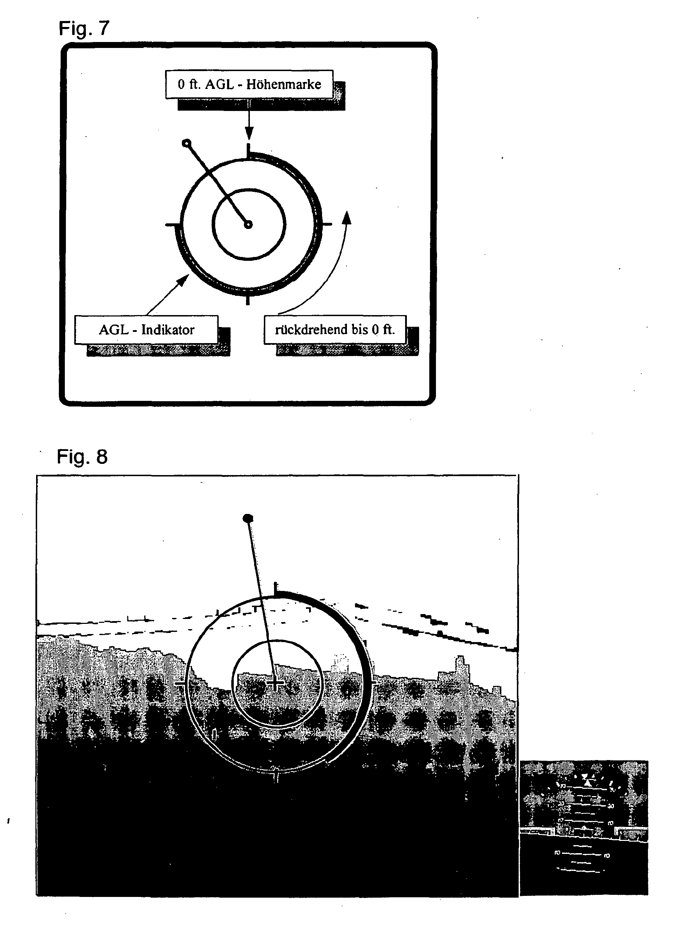

Um auch die Information der Höhe über Grund (AGL) auf eine leicht ablesbare, intuitive Art und Weise durch die vorliegende Erfindung zu lösen, wird die Symbolik des Schwebeflug-Layers um genau ein Graphikelement zur Darstellung der momentanen AGL-Höhe erweitert. Fig. 7 veranschaulicht das Prinzip eines Höhenindikators, im folgenden auch AGL-Indikator genannt, zur Anzeige der momentanen Höhe über Grund in Kombination mit den oben beschriebenen Elementen des Schwebeflug-Layers als zentral angeordnete Anzeige-Symbolik.

Um den äußeren konzentrischen Geschwindigkeitskreis des Schwebeflug-Layers herum wird ein weiterer, in dieser Ausführung breiter ausgeführter Ring gezogen. Dieser Ring fungiert als AGL-Indikator. Der AGL-Indikator beginnt und endet an der so genannten 12 Uhr Strichmarke des Schwebeflug-Layers, d.h. die 12 Uhr Strichmarke entspricht sowohl der Maximalwert-Markierung als auch der Minimalwert-Markierung des AGL-Indikators.

Der AGL-Indikator erscheint zusätzlich zur oben beschriebenen Schwebeflug-Layer-Symbolik, bevorzugt ab einer geeigneten Mindesthöhe des Hubschraubers über Grund (z.B. 100 ft. AGL). Diese Mindesthöhe entspricht dem Maximalwert, der mit dem Höhenindikator angezeigt werden kann. Bei der Mindesthöhe hat der AGL-Indikator die Form eines geschlossenen Kreises.

Wenn der Hubschrauber sinkt und sich dadurch seine Höhe über Grund verringert, reduziert sich synchron die Bogenlänge des ringförmigen AGL-Indikators und zwar rückdrehend im Gegenuhrzeigersinn. Steigt der Hubschrauber wieder, dann nimmt analog die Bogenlänge des AGL-Indikators rechtdrehend im Uhrzeigersinn ebenfalls wieder zu. Die Bogenlänge des ringförmigen AGL-Indikators reduziert sich zu Null genau in dem Moment, in dem der Hubschrauber auf den Erdboden aufsetzt. Damit bekommt die 12 Uhr Strichmarke auf dem äußeren Kreis des Driftindikators zusätzlich die Bedeutung der 0 ft. Höhenmarke. Die zusätzliche Bedeutung der drei anderen Strichmarken (3 Uhr, 6 Uhr, 9 Uhr) ergibt sich leicht und unmittelbar aus der maximalen Anzeigehöhe für den AGL-Indikator, z.B. 3 Uhr = 25 ft., 6 Uhr = 50 ft., 9 Uhr = 75 ft., wenn die max. Anzeigehöhe bei 12 Uhr = 100 ft liegt.

In einer weiteren, hier nicht dargestellten Variante des AGL-Indikators kann sein Darstellungsbereich auf weniger als 360 Grad festgelegt werden, z.B. auf einen Halbkreis, so dass die Höhen zwischen Mindesthöhe und Höhe 0 ft im Winkelbereich zwischen 0 und 180 Grad dargestellt werden. In einer solchen Ausführung würde bei Erreichen der Mindesthöhe ein Halbkreis dargestellt.

Der große Vorteil des sich mit der Höhe über Grund ändernden AGL-Indikators liegt ganz wesentlich darin, dass er sich an den äußeren Geschwindigkeitskreis des Driftindikators anschmiegt. Dadurch ist es dem Piloten möglich, beide Anzeigen - Driftindikator und Höhenanzeige - gleichzeitig im Auge zu behalten. Diese Lösung hat gegenüber anderen Anzeigekonzepten - insbesondere an- und abschwellende Balkenanzeigen, wie sie z.B. in der oben angeführten WO 2005/015333 A2 vorgestellt werden - den Vorteil, dass sich der Blick und die Aufmerksamkeit des Piloten nicht vom Zentrum des MMI an den Bildschirmrand verlagern bzw. hin- und herschalten muss, um die wesentlichen Kenngrößen für die Kontrolle des Hubschraubers im Brown-Out Fall ablesen zu können. Hinzu kommt, dass ein Flug unter Brown-Out Bedingungen bei ganz oder teilweise eingeschränkter Cockpit-Außensicht eine sehr hohe Konzentration durch den Piloten erfordert. Eine sehr hohe Konzentration kann aber beim Menschen zu einem so genannten "Tunnelblick" führen. Bei dem erfindungsgemäßen Brown-Out MMI sind deshalb die wesentlichen Kenngrößen zentral angeordnet und mit einem Blick erfassbar.

Fig. 8 zeigt eine konkrete graphische Realisierung des Schwebeflug-Layers mit der beschriebenen Symbolik, welche dem 3D-Szenen-Layer überlagert ist.

Der Schwebeflug-Layer kann eine große Vielzahl von zusätzlichen alphanumerischen und/oder graphischen Anzeigen enthalten. Welche zusätzlichen Anzeigen in diesen Layer aufgenommen werden, kann an den jeweiligen Einsatzzweck eines bestimmten Hubschraubermusters angepasst werden.

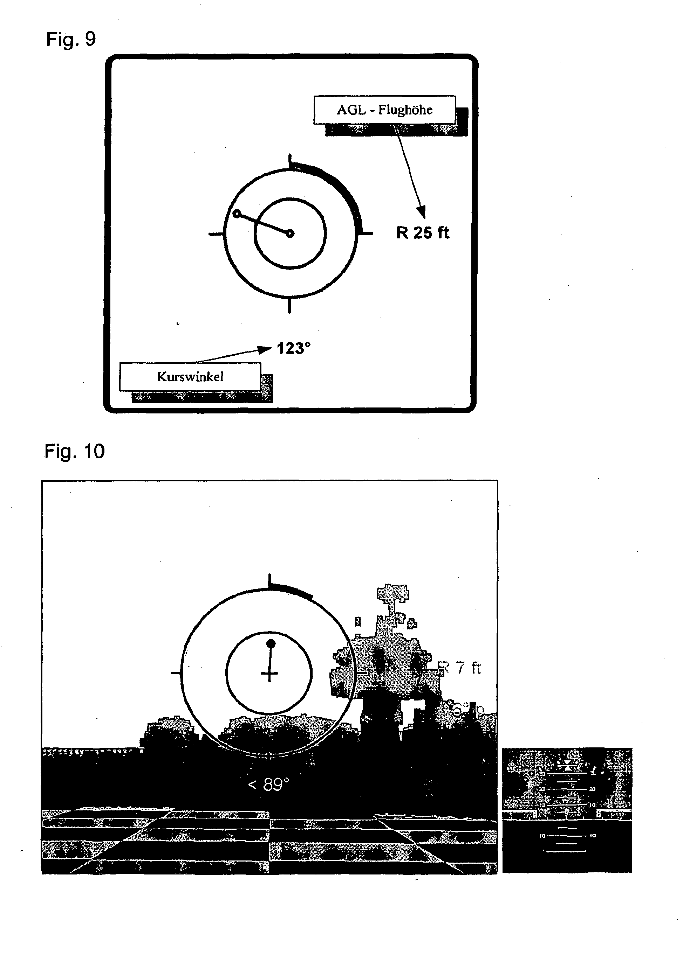

Es gibt zwei grundlegende Kenngrößen, die bevorzugt Bestandteil dieses Layers sein können. Dies sind zum einen die numerische Anzeige des momentanen Kurswinkels sowie die numerische Anzeige der momentanen Höhe über Grund (AGL-Flughöhe). Da die Höhe über Grund in der Luftfahrt oft auch als Radar-Höhe bezeichnet wird, kann der entsprechenden numerischen Anzeige z.B. ein "R" vorangestellt werden, um keine Verwechselungen mit anderen Anzeigen aufkommen zu lassen. Wichtig ist, dass die numerische Anzeige der AGL-Flughöhe eine exakte Entsprechung der Bogenlänge des oben beschriebenen graphischen AGL-Indikators in Form eines Kreisbogens variabler Länge besitzt. Eine solche Ausführung zeigt in schematischer Darstellung die Fig. 9.

Eine weitere vorteilhafte Ergänzung des Brown-Out MMI's ist z.B. auch die Anzeige des momentanen Nickwinkels des Hubschraubers. Dies kann (a) numerisch erfolgen - wie in Fig. 10 gezeigt - und/oder (b) graphisch durch Anzeige einer so genannten Pitch-Ladder. Man muss jedoch beachten, dass der Nick- als auch der Rollwinkel des Hubschraubers bereits sehr gut durch die Kombination des Basis- und 3D-Szenen-Layers abgeschätzt werden können, so dass auf diese zusätzliche Anzeige in vielen Fällen verzichtet werden kann, um die Anzeige auf die absolut notwendigen Elemente zu beschränken.

Fig. 10 zeigt eine konkrete graphische Realisierung des erfindungsgemäßen MMIs aus der Überlagerung von Basis-Layer, 3D-Szenen-Layer und erweitertem Schwebeflug-Layer. Die Anzeige umfasst unterhalb des Driftindikators die numerische Darstellung des momentanen Kurswinkels mit vorangestelltem Nordrichtungsindikator. Am rechten Rand erkennt man übereinander die numerische Darstellung der AGL-Flughöhe sowie des momentanen Nickwinkels (Pitch). Die Graphik rechts zeigt zusätzlich wieder die zugehörige Fluglage.

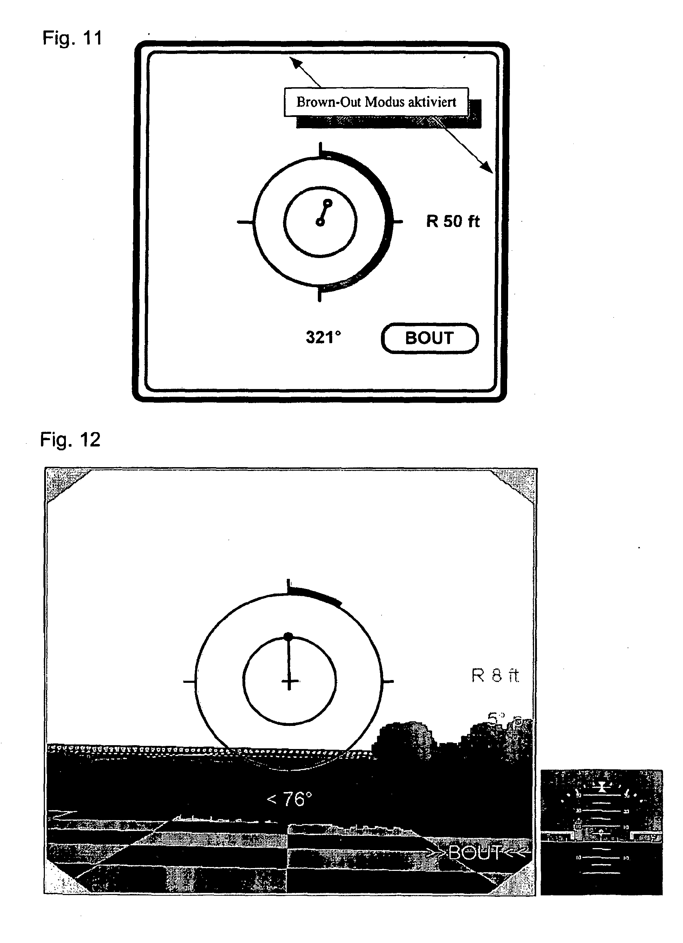

Zur weiteren Optimierung kann vorteilhaft ein zusätzlicher Graphik-Layer in dem erfindungsgemäßen Brown-Out MMI's vorhanden sein. Er dient zur Kennzeichnung eines Brown-Out Zustandes. Wenn der Hubschrauber sich im Brown-Out befindet kann dies (a) durch einen geeigneten Schriftzug und/oder (b) durch ein unverwechselbares Symbol angezeigt werden. In der Ausführung nach Fig. 11 zum Beispiel wird der umrandete Schriftzug BOUT rechts unten innerhalb des Displays angezeigt. Alternativ oder zusätzlich können zur besseren Kennzeichnung eines Brown-Out Zustandes weitere graphische Elemente zur Anwendung kommen, z.B. ein zusätzlicher Rahmen am Rand des Displays, wie ebenfalls in Fig. 11 exemplarisch gezeigt. Der Schriftzug und der Rahmen können während ihrer Aktivierung auch blinkend ausgebildet sein.

In der konkreten Ausführung nach Fig. 12 ist dieser Rahmen noch weiter betont, in dem seine Ecken ausgefüllt sind.

## Patentansprüche

1. Mensch-Maschinen-Interface zur Pilotenunterstützung bei Start oder Landung eines Fluggeräts unter verminderter Außensicht, wobei auf einer einzigen Anzeigeeinrichtung mehrere Graphik-Layer überlagert werden:
- ein Schwebeflug-Layer zur kombinierten Darstellung der Geschwindigkeit über Grund, der Richtung der momentanen Bewegungs- oder Driftrichtung in Relation zur Hubschrauber-Längsachse sowie der Flughöhe über Grund, der als graphische Elemente einen strahlförmigen Driftindikator variabler Richtung und Länge, dessen Länge und Richtung dem Betrag und der Richtung der Bewegungs- oder Driftgeschwindigkeit entspricht, sowie konzentrische Kreise enthält, deren Durchmesser festen Beträgen der Bewegungs- oder Driftgeschwindigkeit entsprechen, und deren Mittelpunkt dem Nullpunkt des Driftindikators entspricht, wobei an dem äußeren Kreis eine Markierung für die Vorausrichtung angeordnet ist,
- einen 3D-Szenen-Layer, der ein dreidimensionales, zeitlich korrektes sowie positionsgenaues Abbild der realen Umgebung in Richtung des Flugpfads des Hubschraubers darstellt, und der mit den momentanen Flugzustandsdaten und der momentanen Höhe über Grund kontinuierlich aktualisiert wird,
**dadurch gekennzeichnet, dass**
- als weiterer Graphik-Layer ein Basis-Layer vorhanden ist in Form einer ebenen Basisfläche, welche eine idealisierte Bodenfläche symbolisiert, berechnet nur aufgrund des momentanen Wertes der Flughöhe über Grund und der momentanen Fluglagedaten, wobei die Basisfläche durch einen künstlichen Horizont begrenzt und mit den momentanen Flugzustandsdaten und der momentanen Höhe über Grund kontinuierlich aktualisiert wird,
- der Schwebeflug-Layer als weiteres graphisches Element einem Höhenindikator in Form eines von einer festen Minimalwert-Markierung ausgehenden Kreisbogens variabler Bogenlänge enthält, dessen Bogenlänge der Höhe des Hubschraubers über Grund entspricht, wobei der Kreisbogen des Höhenindikators konzentrisch zu den konzentrischen Kreisen für die Bewegungs- oder Driftgeschwindigkeitsanzeige angeordnet ist.

2. Mensch-Maschinen-Interface nach Anspruch 1, **dadurch gekennzeichnet, dass** auf der Basisfläche des Basis-Layers Flucht und Distanzlinien vorhanden sind.

3. Mensch-Maschinen-Interface nach Anspruch 1 oder 2, **dadurch gekennzeichnet, dass** die Basisfläche des Basis-Layers mit einem Schachbrettmuster oder einer Bodentextur vollständig oder teilweise belegt ist.

4. Mensch-Maschinen-Interface nach einem der Ansprüche 1 bis 3, **dadurch gekennzeichnet, dass** der 3D-Szenen-Layer aus folgenden Typen von graphischen Elementen besteht:
- einer 3D-Bodenfläche als Approximation der lokalen Topographie des Erdbodens,
- der Abbildung der Nicht-Bodenobjekte oberhalb der 3D-Bodenfläche.

5. Mensch-Maschinen-Interface nach Anspruch 4, **dadurch gekennzeichnet, dass** auf der approximierten 3D-Bodenfläche Flucht und Distanzlinien vorhanden sind.

6. Mensch-Maschinen-Interface nach einem der Ansprüche 4 oder 5, **dadurch gekennzeichnet, dass** die approximierte 3D-Bodenfläche mit einem Schachbrettmuster oder einer Bodentextur vollständig oder teilweise belegt ist.

7. Mensch-Maschinen-Interface nach einem der Ansprüche 4 bis 6 , **dadurch gekennzeichnet, dass** Nicht-Bodenobjekte segmentiert, d.h. vom Boden getrennt und/oder nach vorgegebenen Objekt- bzw. Hindernistypen klassifiziert werden, und graphisch hervorgehoben werden.

8. Mensch-Maschinen-Interface nach Anspruch 7, **dadurch gekennzeichnet, dass** alle oder einzelne der segmentierten bzw. klassifizierten Nicht-Bodenobjekte mit einem graphischem Muster oder einer Objekttextur vollständig oder teilweise belegt sind.

9. Mensch-Maschinen-Interface nach einem der Ansprüche 7 oder 8, **dadurch gekennzeichnet, dass** die approximierte 3D-Bodenfläche und/oder die segmentierten bzw. klassifizierten Nicht-Bodenobjekte vollständig oder teilweise durch graphische Büdverbesserung in Form von künstlichem Schattenwurf oder Selbst-Illumination gesondert hervorgehoben werden.

10. Mensch-Maschinen-Interface nach einem der vorangehenden Ansprüche, **dadurch gekennzeichnet, dass** der Höhenindikator nur unterhalb einer vorgegebenen Mindesthöhe angezeigt wird.

11. Mensch-Maschinen-Interface nach einem der vorangehenden Ansprüche, **dadurch gekennzeichnet, dass** die Maximalwert-Markierung des Höhenindikators der vorgegebenen Mindesthöhe entspricht.

12. Mensch-Maschinen-Interface nach einem der vorangehenden, **dadurch gekennzeichnet, dass** die Minimalwert-Markierung des Höhenindikators der Höhe Null entspricht.

13. Mensch-Maschinen-Interface nach einem der vorangehenden Ansprüche, **dadurch gekennzeichnet, dass** sich der Kreisbogen für den Höhenindikator an den äußeren Kreis für die Bewegungs- und Driftgeschwindigkeitsanzeige anschmiegt.

14. Mensch-Maschinen-Interface nach einem der vorangehenden Ansprüche, **dadurch gekennzeichnet, dass** die Maximalwert-Markierung des Höhenindikators an der Markierung für die Vorausrichtung liegt.

15. Mensch-Maschinen-Interface nach einem der vorangehenden Ansprüche, **dadurch gekennzeichnet, dass** die Minimal-Markierung des Höhenindikators an der Markierung für die Vorausrichtung liegt.

16. Mensch-Maschinen-Interface nach einem der vorangehenden Ansprüche, **dadurch gekennzeichnet, dass** auf der Anzeigeeinrichtung zusätzlich die numerische Anzeige des Kurswinkels und /oder der momentanen Höhe über Grund angezeigt werden.

17. Mensch-Maschinen-Interface nach einem der vorangehenden Ansprüche, **dadurch gekennzeichnet, dass** auf der Anzeigeeinrichtung zusätzlich die numerische und/oder graphische Anzeige des momentanen Nickwinkels angezeigt wird.

18. Mensch-Maschinen-Interface nach einem der vorangehenden Ansprüche, **dadurch gekennzeichnet, dass** auf der Anzeigeeinrichtung zusätzlich das Vorhandensein einer Situation mit eingeschränkter Sichtbedingungen durch ein graphisches und/oder alphanumerisches Symbol dargstellt wird.

## Claims

1. Human-machine interface for supporting a pilot when taking off or landing an aircraft in reduced visibility, a plurality of graphics layers being superimposed on a single display device:
- a hovering flight layer for the combined display of the ground speed, of the direction of the instantaneous direction of movement or of drift in relation to the helicopter longitudinal axis, and of the altitude above ground which includes as graphics elements a jet-type drift indicator of variable direction and length, whose length and direction correspond to the absolute value and the direction of the speed of movement or of drift, and concentric circles whose diameter corresponds to fixed absolute values of the speed of movement or of drift, and whose centre corresponds to the zero point of the drift indicator, a marking for the forward direction being arranged on the outer circle, and
- a 3D scenes layer, which displays a three-dimensional, temporally correct and positionally accurate image of the real surroundings in the direction of the flight path of the helicopter, and which is continuously updated with the instantaneous flight state data and the instantaneous height above ground,
**characterized in that**
- present as further graphics layer is a base layer in the form of a flat base surface which symbolizes an idealized ground surface, calculated only on the basis of the instantaneous value of the altitude above ground and the instantaneous flight attitude data, the base surface being bounded by an artificial horizon and being continuously updated with the instantaneous flight state data and the instantaneous height above ground,
- as further graphics element, the hovering flight layer includes a height indicator in the form of a circular arc of variable arc length, which emanates from a fixed minimum value marking and whose arc length corresponds to the height of the helicopter above ground, the circular arc of the height indicator being arranged concentrically in relation to the concentric circles for the display of the speed of movement or of drift.

2. Human-machine interface according to Claim 1, **characterized in that** flight and distance lines are present on the base surface of the base layer.

3. Human-machine interface according to Claim 1 or 2, **characterized in that** the base surface of the base layer is occupied completely or partially by a chessboard pattern or a ground texture.

4. Human-machine interface according to one of Claims 1 to 3, **characterized in that** the 3D scenes layer comprises the following types of graphics elements:
- a 3D ground surface as approximation of the local topography of the ground, and
- the image of the non-ground objects above the 3D ground surface.

5. Human-machine interface according to Claim 4, **characterized in that** flight and distance lines are present on the approximated 3D ground surface.

6. Human-machine interface according to either of Claims 4 and 5, **characterized in that** the approximated 3D ground surface is occupied completely or partially by a chessboard pattern or a ground texture.

7. Human-machine interface according to one of Claims 4 to 6, **characterized in that** non-ground objects are classified segmentally, that is to say separately from the ground and/or according to prescribed types of object and/or obstacle, and are graphically highlighted.

8. Human-machine interface according to Claim 7, **characterized in that** all or individual ones of the segmented and/or classified non-ground objects are occupied completely or partially by a graphics pattern or an object texture.

9. Human-machine interface according to either of Claims 7 and 8, **characterized in that** the approximated 3D ground surface and/or the segmented and/or classified non-ground objects are separately highlighted completely or partially by graphical image enhancement in the form of artificial shading or self-illumination.

10. Human-machine interface according to one of the preceding claims, **characterized in that** the height indicator is displayed only below a prescribed minimum height.

11. Human-machine interface according to one of the preceding claims, **characterized in that** the maximum value marking of the height indicator corresponds to the prescribed minimum height.

12. Human-machine interface according to one of the preceding claims, **characterized in that** the minimum value marking of the height indicator corresponds to the zero height.

13. Human-machine interface according to one of the preceding claims, **characterized in that** the circular arc for the height indicator fits closely against the outer circle for the display of the speed of movement and of drift.

14. Human-machine interface according to one of the preceding claims, **characterized in that** the maximum value marking of the height indicator lies on the marking for the forward direction.

15. Human-machine interface according to one of the preceding claims, **characterized in that** the minimum marking of the height indicator lies on the marking for the forward direction.

16. Human-machine interface according to one of the preceding claims, **characterized in that** the numerical display of the course angle and/or of the instantaneous height above ground are/is additionally displayed on the display device.

17. Human-machine interface according to one of the preceding claims, **characterized in that** the numerical and/or graphical display of the instantaneous pitch angle are/is additionally displayed on the display device.

18. Human-machine interface according to one of the preceding claims, **characterized in that** the presence of a situation with restricted visual conditions is additionally displayed on the display device by a graphic and/or alphanumeric symbol.

## Revendications

1. Interface homme-machine pour l'aide au pilotage lors du décollage ou de l'atterrissage d'un aéronef en cas de visibilité extérieure réduite, dans lequel une pluralité de couches graphiques sont superposées sur un dispositif d'affichage unique :
- une couche de vol stationnaire destinée à une représentation combinée de la vitesse au-dessus du sol, de la direction de déplacement ou de la direction de dérive instantanée par rapport à l'axe longitudinal de l'hélicoptère ainsi que de l'altitude de vol au-dessus du sol, qui contient, en tant qu'éléments graphiques, un indicateur de dérive sous forme de faisceau de direction et de longueur variables, dont la longueur et la direction correspondent au module et à la direction de la vitesse de déplacement ou de dérive, ainsi que des cercles concentriques dont les diamètres correspondent à des modules fixes de la vitesse de déplacement ou de dérive, et dont le centre correspond au point zéro de l'indicateur de dérive,
dans lequel un repère est disposé sur le cercle extérieur destiné au cap,
- une couche de scènes 3D qui représente une image tridimensionnelle temporellement correcte et de position exacte de l'environnement réel dans la direction du trajet de vol de l'hélicoptère et qui est actualisée en continu à l'aide des données d'état de vol instantanées et des altitudes instantanées au-dessus du sol, **caractérisée**
- **en ce qu'**une couche de base est présente en tant que couche graphique supplémentaire sous la forme d'une surface de base plane qui symbolise une surface du sol idéalisée et qui n'est calculée que sur la base de la valeur instantanée de l'altitude de vol au-dessus du sol et des données de position de vol instantanées, dans lequel la surface de base est délimitée par un horizon artificiel et est actualisée à l'aide des données d'état de vol instantanées et de l'altitude instantanée au-dessus du sol,
- **en ce que** la couche de vol stationnaire contient en tant qu'autre élément graphique un indicateur d'altitude sous la forme d'un arc de cercle ayant une longueur d'arc variable et partant d'un repère de valeur minimale fixe, dont la longueur d'arc correspond à l'altitude de l'hélicoptère au-dessus du sol, dans lequel l'arc de cercle de l'indicateur d'altitude est disposé de manière concentrique par rapport aux cercles concentriques destinés à l'affichage de la vitesse de déplacement ou de dérive.

2. Interface homme-machine selon la revendication 1, **caractérisée en ce que** des alignements et des lignes de distance sont présents sur la surface de base de la couche de base.

3. Interface homme-machine selon la revendication 1 ou 2, **caractérisée en ce que** la surface de base de la couche de base est entièrement ou partiellement recouverte d'un motif d'échiquier ou d'une texture du sol.

4. Interface homme-machine selon l'une quelconque des revendications 1 à 3, **caractérisée en ce que** la couche de scènes 3D est constituée des types suivants d'éléments graphiques :
- une surface de sol 3D en tant qu'approximation de la topographie locale du sol,
- l'image des objets ne se trouvant pas au sol au-dessus de la surface du sol 3D.

5. Interface homme-machine selon la revendication 4, **caractérisée en ce que** des alignements et des lignes de distance sont présents sur la surface du sol 3D représentée de façon approximative.

6. Interface homme-machine selon l'une quelconque des revendications 4 ou 5, **caractérisée en ce que** la surface du sol 3D représentée de façon approximative est entièrement ou partiellement recouverte d'un motif d'échiquier ou d'une texture du sol.

7. Interface homme-machine selon l'une quelconque des revendications 4 à 6, **caractérisée en ce que** des objets ne se trouvant pas au sol sont segmentés, c'est-à-dire sont séparés du sol et/ou sont classés selon des types d'objets ou d'obstacles prédéterminés, et sont mis en évidence de manière graphique.

8. Interface homme-machine selon la revendication 7, **caractérisée en ce que** la totalité ou certains des objets ne se trouvant pas au sol ayant été segmentés ou classés sont entièrement ou partiellement recouverts d'un motif graphique ou d'une structure d'objet.

9. Interface homme-machine selon l'une quelconque des revendications 7 ou 8, **caractérisée en ce que** la surface du sol 3D représentée de façon approximative et/ou les objets ne se trouvant pas au sol ayant été segmentés ou classés sont entièrement ou partiellement mis en évidence de manière distinctive par une amélioration graphique d'image sous la forme d'ombres projetées artificielles ou d'une auto-illumination.

10. Interface homme-machine selon l'une quelconque des revendications précédentes, **caractérisée en ce que** l'indicateur d'altitude n'est affiché qu'en dessous d'une altitude minimale prédéterminée.

11. Interface homme-machine selon l'une quelconque des revendications précédentes, **caractérisée en ce que** le repère de valeur maximale de l'indicateur d'altitude correspond à l'altitude minimale prédéterminée.

12. Interface homme-machine selon l'une quelconque des revendications précédentes, **caractérisée en ce que** le repère d'altitude minimale de l'indicateur d'altitude correspond à l'altitude nulle.

13. Interface homme-machine selon l'une quelconque des revendications précédentes, **caractérisée en ce que** l'arc de cercle destiné à l'indicateur d'altitude épouse le cercle extérieur destiné à l'affichage de la vitesse de déplacement et de dérive.

14. Interface homme-machine selon l'une quelconque des revendications précédentes, **caractérisée en ce que** le repère de valeur maximale de l'indicateur d'altitude se situe sur le repère destiné au cap.

15. Interface homme-machine selon l'une quelconque des revendications précédentes, **caractérisée en ce que** le repère de valeur minimale de l'indicateur d'altitude se situe sur le repère destiné au cap.

16. Interface homme-machine selon l'une quelconque des revendications précédentes, **caractérisée en ce que** l'affichage numérique de l'angle de cap et/ou de l'altitude instantanée au-dessus du sol est en outre affiché sur le dispositif d'affichage.

17. Interface homme-machine selon l'une quelconque des revendications précédentes, **caractérisée en ce que** l'affichage numérique et/ou graphique de l'angle de tangage instantané est en outre affiché sur le dispositif d'affichage.

18. Interface homme-machine selon l'une quelconque des revendications précédentes, caractérisée la présence d'une situation présentant des conditions de visibilité réduite est en outre représentée par un symbole graphique et/ou alphanumérique sur le dispositif d'affichage.
